# EUROPÄISCHE PATENTANMELDUNG

(11) **EP 0 696 830 A1**
(43) Veröffentlichungstag der Anmeldung: **14.02.1996**
(21) Anmeldenummer: 95111943.7
(22) Anmeldetag: 29.07.1995
(51) Int. Cl.: H02H 9/08, H02H 7/26

(54) **Erdschlussortung in elektrischen Netzen mit einer Erdschlussspule**

(30) Priorität: 09.08.1994 DE 4428118
(71) Anmelder: Licentia Patent-Verwaltungs-GmbH, D-60596 Frankfurt (DE)
(72) Erfinder: Schegner, Peter, Dr.-Ing., D-63755 Alzenau (DE); Erk, Ulrich, D-73240 Wendlingen (DE)
(74) Vertreter: Erbacher, Alfons, Dipl.-Ing.

(57) **Zusammenfassung**

Gegenstand der Erfindung ist eine Erdschlußortung in einem elektrischen Netz mit einer Erdschlußlöschspule nach der Pulsmethode. In der Erdschlußlöschspule wird durch sekundäre Verstimmung der Erdschlußspuleneinstellung ein Strom bestimmter Phasenlage erzeugt. Aus dem gemessenen Summenstrom wenigstens eines Abzweigs des Netzes wird eine Stromkomponente mit gleicher Phasenlage wie der erzeugte Strom gebildet. Die Stromänderung der Stromkomponente infolge der Verstimmung der Erdschlußlöschspule wird mit einem Schwellenwert verglichen, bei dessen Erreichen oder Überschreiten eine Meldung erzeugt wird.

## Beschreibung

Die Erfindung bezieht sich auf ein Verfahren zur Erdschlußortung nach der Pulsmethode in einem elektrischen Netz mit einer Erdschlußspule.

In Mittelspannungsnetzen werden vielfach Erdschlußlöschspulen eingesetzt, die zwischen Sternpunkt und Erde angeordnet sind und deren Induktivität so eingestellt wird, daß die Kapazitäten des Netzes gegenüber Erde kompensiert werden. Damit sollen Erdschlußstellen von kapazitiven Erdschlußströmen weitgehend entlastet werden.

Zur Ortung der Stellen, an denen in Netzen der vorstehend beschriebenen Art Fehler in Form von Erdschlüssen aufgetreten sind, wurden verschiedene Verfahren entwickelt. Eines dieser Verfahren ist die sog. Pulsmethode, bei der in den Spulenstromkreis eingegriffen wird. Die Erdschlußlöschspule wird bei der Pulsmethode verstimmt, indem an eine Hilfswicklung taktweise ein Kondensator angeschlossen wird. Der Kondensator wird z. B. mit einem Schütz zu- und abgeschaltet. Die Taktfrequenz liegt zwischen 0,3 und 1 Hz. Durch die Auswahl der Kapazität wird die Höhe des über die Erdschlußlöschspule fließenden Stroms so beeinflußt, daß die Stromänderung des Summenstroms erkennbar ist, was z. B. mit Amperemetern geschieht. Anstelle von Amperemetern werden auch sog. Pulsortungsrelais verwendet. Die Erdschlußortung nach der Pulsmethode ist in dem Buch "Schutztechnik in elektrischen Netzen", VDE-Verlag, Seiten 152, 153 und in der Zeitschrift "Elektrizitätswirtschaft", Jg. 81 (1982), H. 23, S. 805 und 806, beschrieben.

Für die automatische Erfassung der vom Fehler betroffenen Leitung werden Pulsortungsrelais verwendet. Die Pulsmethode liefert vielfach keine eindeutigen Ergebnisse. Dies ist insbesondere der Fall, wenn der Erdschlußstrom groß gegenüber dem eingeprägten Pulsstrom ist.

Bei einer Änderung der Phasenlage des Erdschlußstroms kann es auch vorkommen, daß im Erdschlußstrom trotz eingeprägtem Pulsstrom keine Änderungen mit einem Pulsortungsrelais festgestellt werden können. Hier setzt die Erfindung ein, der die Aufgabe zugrunde liegt, die Pulsmethode für die Erdschlußortung dahingehend weiterzuentwickeln, daß Fehler in einem eine Erdschlußlöschspule aufweisenden Netz mit größerer Genauigkeit festgestellt werden können.

Die Aufgabe wird erfindungsgemäß dadurch gelöst, daß in der Erdschlußlöschspule durch sekundäre Verstimmung der Erdschlußspuleneinstellung ein Strom bestimmter Phasenlage erzeugt wird, daß aus der gemessenen Grundwelle des Summenstrom wenigstens eines Abzweigs des Netzes eine Stromkomponente mit gleicher Phasenlage wie der erzeugte Strom gebildet wird und daß die Stromänderung der Stromkomponente infolge Verstimmung der Erdschlußlöschspule mit einem Schwellenwert verglichen wird, bei dessen Erreichen oder Überschreiten eine Meldung erzeugt wird. Mit diesem Verfahren lassen sich Erdschlüsse in Abzweigen zuverlässiger orten. Änderungen der Phasenlage des Erdschlußstroms wirken sich auf die Stromerfassung weniger ungünstig aus als bei der bekannten Pulsmethode. Die Verstimmung der Erdschlußspuleneinstellung kann kapazitiv, resistiv oder induktiv sein.

Vorzugsweise wird die Stromkomponente des Summenstroms, die die gleiche Phasenlage wie der in der Erdschlußlöschspule durch Verstimmung erzeugte Strom hat, durch Fourier-Zerlegung des gemessenen Summenstroms bestimmt. Ströme und Spannungen in Energieverteilungsnetzen werden aus Überwachungsgründen fortlaufend, z. B. durch Abtastung in vorgegebenen Zeitabständen, gemessen. Die Meßwerte werden für gewisse Zeitspannen gespeichert und ausgewertet. Falls sich keine für das Einleiten von Schutzmaßnahen relevanten Änderungen ergeben haben, werden die gespeicherten Werte fortlaufend durch neue Meßwerte überschrieben. Die für anderweitige Zwecke ohnedies benötigten Strommeßwerte können für die oben beschriebene Erdschlußortung nach der Fourier-Methode zerlegt werden.

Die Amplitude der gleichphasigen Stromkomponente wird insbesondere mit einem vorgebbaren Schwellenwert verglichen, bei dessen Erreichen oder überschreiten eine Fehlermeldung in Bezug auf denjenigen Abzweig erzeugt wird, dessen Summenstrom für den Vergleich verwendet wurde.

Die Erzeugung der mit dem durch Verstimmung erzeugten Strom gleichphasigen Stromkomponente des Summenstroms kann auch mit analogen Mitteln erfolgen.

Die Erfindung wird im folgenden anhand eines in einer Zeichnung dargestellten Ausführungsbeispiels näher beschrieben, aus dem sich weitere Einzelheiten, Merkmale und Vorteile ergeben.

In einem Mittelspannungs-Verteilungsnetz ist ein Transformator 1 vorgesehen, dessen sekundärseitiger Sternpunkt über eine Erdschlußlöschspule (Petersenspule) 2 an Erde gelegt ist. Die Ströme eines Abzweigs z. B. einer Leitung 3 mit den drei Phasen R, S, T werden mit Stromwandlern 4 gemessen, an die eine Auswertanordnung 5 angeschlossen ist. In der Regel sind mehrere Abzweige vorhanden, die entsprechend überwacht werden. Die Erdschlußlöschspule hat eine Sekundärwicklung 6, an die ein Kondensator 7 und ein Schalter 8 in Reihe angeschlossen sind. Der Schalter 8 wird durch eine Schaltanordnung 9 periodisch, z. B. mit einer Frequenz zwischen 0,5 und 1 Hz, ein- und ausgeschaltet. Die Erdschlußlöschspule wird dadurch mittels des Kondensators 7 periodisch verstimmt, wobei ein kapazitiver Strom auf der Sekundärseite der Erdschlußlöschspule 5 fließt. Diesem Strom entspricht ein kapazitiver Strom auf der Primärseite.

Wenn kein Erdschluß in einer der Leitungen 3 auftritt, ist der mit Stromwandlern 4 gemessene Strom konstant.

Bei einem Erdschluß, z. B. in der Leitung 3, ändert sich die Grundwelle des Summenstroms. In der Auswertanordnung 5 wird dieser Summenstrom, z. B. durch Abtastung, gemessen. Die Meßwerte werden für eine gewisse Zeit gespeichert und anschließend ausgewertet. Wenn sich keine Änderungen ergeben, werden die gespeicherten Werte durch neue Werte überschrieben.

Aus den Meßwerten des Summenstroms wird eine Stromkomponente gebildet, deren Phasenlage gleich derjenigen des mit dem Kondensator 7 durch Verstimmung der Erdschlußlöschspule 2 erzeugten Stroms ist. Die Bildung der Stromkomponente erfolgt vorzugsweise mittels Fourier-Zerlegung der Meßwerte. Der durch Verstimmung hervorgerufene Strom führt dazu, daß in der Summenstromkomponente höhere Pulsströme auftreten, deren Amplituden mit einer Schwellwertschaltung erfaßt werden.

Die Schwellwertschaltung ist auf einen für Erdschlüsse charakteristischen Wert eingestellt. Wird dieser Wert vom Pulsstrom erreicht oder überschritten, erfolgt eine Fehlermeldung für den betreffenden Abzweig. Mit dem oben beschriebenen Verfahren ist es möglich, die Fehlerorte genauer und zuverlässiger zu bestimmen. Die Messung ist unabhängiger von Netzparameteränderungen als die eingangs beschriebene Pulsmethode.

Die Summenstromüberwachung wird für die jeweiligen Abzweige im Netz durchgeführt, so daß im Fehlerfall der betroffene Abzweig schnell und mit großer Zuverlässigkeit erkannt wird.

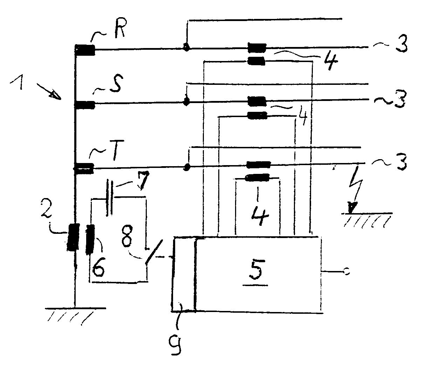

## Patentansprüche

1. Verfahren zur Erdschlußortung in einem elektrischen Netz mit einer Erdschlußlöschspule nach der Pulsmethode,
**dadurch gekennzeichnet,**
daß in der Erdschlußlöschspule durch sekundäre Verstimmung der Erdschlußspuleneinstellung ein Strom bestimmter Phasenlage erzeugt wird, daß aus der gemessenen Grundlage des Summenstroms wenigstens eines Abzweigs des Netzes eine Stromkomponente mit gleicher Phasenlage wie der erzeugte Strom gebildet wird und daß die Stromänderung der Stromkomponente infolge der Verstimmung der Erdschlußlöschspule mit einem Schwellenwert verglichen wird, bei dessen Erreichen oder Überschreiten eine Meldung erzeugt wird.

2. Erdschlußortung nach Anspruch 1,
**dadurch gekennzeichnet,**
daß die Stromkomponente des Summenstroms, die die gleiche Phasenlage wie der in der Erdschlußlöschspule durch Verstimmung erzeugte Strom hat, durch Fourier-Zerlegung des gemessenen Summenstroms bestimmt wird.

3. Erdschlußortung nach Anspruch 1 oder 2,
**dadurch gekennzeichnet,**
daß die Amplitude der Stromkomponente mit dem Schwellenwert verglichen wird.
